(19) Europäisches Patentamt
European Patent Office
Office européen des brevets

(11) **EP 3 999 389 B1**

(12) **EUROPÄISCHE PATENTSCHRIFT**

(45) Veröffentlichungstag und Bekanntmachung des Hinweises auf die Patenterteilung:
**10.07.2024  Patentblatt 2024/28**

(21) Anmeldenummer: **20724808.9**

(22) Anmeldetag: **07.05.2020**

(51) Internationale Patentklassifikation (IPC):
***B60T 8/172*** *(2006.01)*      ***B60T 8/1755*** *(2006.01)*

(52) Gemeinsame Patentklassifikation (CPC):
**B60T 8/17551; B60T 8/172;** B60T 2240/06;
B60T 2260/06; B60T 2270/86

(86) Internationale Anmeldenummer:
**PCT/EP2020/062709**

(87) Internationale Veröffentlichungsnummer:
**WO 2021/008751 (21.01.2021 Gazette 2021/03)**

(54) **VERFAHREN UND VORRICHTUNG ZUM BETREIBEN EINES BREMSSYSTEMS, COMPUTERPROGRAMM UND COMPUTERPROGRAMM-PRODUKT, BREMSSYSTEM**

METHOD AND DEVICE FOR OPERATING A BRAKING SYSTEM, COMPUTER PROGRAM AND COMPUTER PROGRAM PRODUCT, BRAKING SYSTEM

PROCÉDÉ ET DISPOSITIF POUR FAIRE FONCTIONNER UN SYSTÈME DE FREINAGE, PROGRAMME D'ORDINATEUR ET PRODUIT PROGRAMME D'ORDINATEUR, SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2019  DE 102019210670**

(43) Veröffentlichungstag der Anmeldung:
**25.05.2022  Patentblatt 2022/21**

(73) Patentinhaber: **Robert Bosch GmbH**
**70442 Stuttgart (DE)**

(72) Erfinder:
• **KLUG, Andreas**
**74199 Untergruppenbach (DE)**
• **ZOEBELE, Andreas**
**71706 Markgroeningen (DE)**
• **EISELE, Achim**
**74394 Hessigheim (DE)**
• **WEINGART, Philipp**
**74080 Heilbronn (DE)**
• **KRANICH, Matthias**
**71723 Grossbottwar (DE)**
• **BECKER, Jan**
**71522 Backnang (DE)**

(56) Entgegenhaltungen:
DE-A1- 102004 053 236      DE-A1- 102013 217 109
DE-A1- 102015 002 603      US-A- 5 772 289

**Beschreibung**

Die Erfindung betrifft ein Verfahren zum Betreiben eines Bremssystems eines Kraftfahrzeugs, wobei das Kraftfahrzeug eine Karosserie und mehrere relativ zu der Karosserie durch eine Radaufhängung an der Karosserie gelagerte Räder aufweist, wobei die Karosserie durch die Radaufhängung eine Nickbewegung ausführen kann, und wobei das Bremssystem für zumindest einige bzw. wenigstens zwei der Räder eine radindividuelle Radbremse aufweist, und wobei ein Nickwinkel der Karosserie überwacht und die Radbremsen in Abhängigkeit von dem erfassten Nickwickel angesteuert werden.

Weiterhin betrifft die Erfindung eine Vorrichtung zum Betreiben eines derartigen Bremssystems sowie ein entsprechendes Bremssystem. Außerdem betrifft die Erfindung ein Computerprogramm und ein Computerprogramm-Produkt.

Stand der Technik

Verfahren der eingangs genannten Art sind aus dem Stand der Technik bekannt. Aus Sicherheits- und Komfortgründen sind die Räder eines Kraftfahrzeugs üblicherweise relativ zur Karosserie des Kraftfahrzeugs verlagerbar. Diese Verlagerung wird durch eine Radaufhängung gewährleistet, welche beispielsweise als Einzelradaufhängung ausgebildet ist, sodass jedes Rad eine eigene Lagerfeder und einen eigenen Lagerdämpfer aufweist, der zwischen Rad und Karosserie wirkt. Je nach Ausbildung der Radaufhängung wird das Nickverhalten des Kraftfahrzeugs beim Beschleunigen oder Verzögern beeinflusst. Unter einer Nickbewegung ist dabei insbesondere eine derartige Bewegung der Karosserie zu verstehen, bei welcher die Karosserie um eine insbesondere durch ihren Schwerpunkt verlaufende horizontale und quer zur Fahrtrichtung ausgerichtete Achse, insbesondere Nickachse, schwenkt. Bei Bremsvorgängen, die durch einen automatisierten Bremseingriff zur Verbesserung der Bremswirkung und/oder zum Gewährleisten einer Fahrsicherheit beeinflusst oder ausgeführt werden, ändert sich durch das Nickverhalten des Kraftfahrzeugs die mögliche absetzbare Bremsleistung pro Rad. Insbesondere zu Beginn einer solchen Bremsung kann sich die mögliche absetzbare Bremsleistung stark verändern.

Um dies zu berücksichtigen, ist es bekannt, das Nickverhalten der Karosserie in Form von einer Kennlinie zu berücksichtigen. Diese Kennlinie deckt jedoch üblicherweise nur eine spezielle Fahrsituation ab und ist daher nicht ohne weiteres auf andere Fahrsituationen übertragbar.

Bei dem im Dokument US 5 772 289 A beschriebenen Verfahren ist vorgesehen, dass die von der jeweiligen Radbremse einstellbaren Bremskräfte in Abhängigkeit einer durch Beschleunigungssensoren gemessenen Längs- und Querbeschleunigung angepasst werden. Optional wird zusätzlich ein Nickwinkel der Karosserie des Fahrzeugs erfasst, der zur Korrektur der von den Beschleunigungssensoren erfassten Werte verwendet werden kann.

Offenbarung der Erfindung

Das erfindungsgemäße Verfahren mit den Merkmalen des Anspruchs 1 hat den Vorteil, dass eine Möglichkeit geschaffen wird, die Radbremsen optimal anzusteuern, in Abhängigkeit von dem Nickverhalten der Karosserie und unabhängig von einer aktuellen Fahrsituation des Kraftfahrzeugs. Dadurch wird die Bremswirkung beziehungsweise -Leistung optimiert. Durch das erfindungsgemäße Verfahren werden situationsunabhängig auf das Fahrzeug wirkende Kräfte ermittelt und berechnet, um die maximal möglich absetzbare Bremsleistung zu maximieren. Erfindungsgemäß ist hierzu vorgesehen, dass in Abhängigkeit von dem Nickwinkel auf die Räder wirkende Normalkräfte berechnet werden. In Abhängigkeit der berechneten Normalkräfte ist das maximal mögliche Bremsmoment beziehungsweise die maximal mögliche Bremskraft, die zwischen Rad und Fahrbahn wirkt, bestimmbar und entsprechend durch die jeweilige Radbremse einstellbar.

Insbesondere wird der Nickwinkel mithilfe eines programmierten Modells, insbesondere eines Einspurmodells ermittelt. Dadurch ist eine Onboard-Berechnung des Nickwinkels laufend möglich, sodass das Verhalten der Karosserie vorteilhaft überwacht wird. Weiterhin ist bevorzugt vorgesehen, dass das Modell vertikale Translationsbewegungen und Rotationsbewegungen der Karosserie berücksichtigt. Insbesondere werden durch das Modell überlagerte Translationsbewegungen und Rotationsbewegungen erfasst und bei der Berechnung der Normalkräfte berücksichtigt. Dadurch ist eine radindividuelle Normalkraftberechnung vorteilhaft gewährleistet.

Insbesondere wird zumindest ein von der Radaufhängung abhängiger Bremsmomentabstützungsfaktor berücksichtigt. Der Bremsmomentabstützungsfaktor ergibt sich aus der konstruktiven Ausgestaltung der Radaufhängung selbst und berücksichtigt beispielsweise die Bewegungsbahn des Rads beim Einfedern der Karosserie relativ zu der Karosserie.

Vorzugsweise wird zur Bestimmung der vertikalen Translationsbewegung, also dem vertikalen Einfedern der Gesamtkarosserie im Schwerpunkt, eine Vertikaldynamik im Schwerpunkt der Karosserie ermittelt. Diese wird beispielsweise mithilfe eines oder mehrerer Inertialsensoren erfasst. Insbesondere weist die Karosserie zumindest einen Inertialsensor und/oder Beschleunigungssensor auf. Dazu wird insbesondere die Beschleunigung der Karosserie im Schwerpunkt mithilfe der Vertikalkräfte zwischen Karosserie und Rad berechnet, wobei die Vertikalkräfte insbesondere zunächst als bekannte Größe aus einem beziehungsweise dem direkt vorhergehenden Berechnungszyklus vorausgesetzt werden. Durch Integration wird bevorzugt die Geschwindigkeit der Karosserie ermittelt und durch weitere Integration der Einfederweg der Karosserie im Schwerpunkt.

Vorzugsweise wird in Abhängigkeit der ermittelten Vertikaldynamik mithilfe einer Drallsatzberechnung eine Nickdynamik im Schwerpunkt der Karosserie in Abhängigkeit der zwischen den Rädern und der Fahrbahn wirkenden Bremskräfte ermittelt. Zur Bestimmung der Nickdynamik wird bevorzugt die Momentenbilanz über das Drehverhalten der Karosserie aufgestellt. Durch diese Drallsatzberechnung wird die Winkelbeschleunigung mithilfe einer Differentialgleichung ermittelt. Die dafür erforderlichen Größen, wie die Bremskräfte in Längsrichtung, sind bereits bekannt oder werden ermittelt. Die ebenfalls benötigten Vertikalkräfte zwischen Karosserie und Rad werden zunächst als bekannte Größen aus einem, insbesondere dem direkt vorhergehenden Berechnungszyklus vorausgesetzt. Analog zur Vertikalgeschwindigkeit enthält man durch Integration der Winkelbeschleunigung die Winkelgeschwindigkeit und durch weitere Integration den Nickwinkel.

Vorzugsweise wird in Abhängigkeit von der ermittelten Nickdynamik die Vertikaldynamik auf radindividuelle Einfederwege der Radaufhängung transformiert. In Kenntnis des Nickwinkels wird die Transformation des Einfederwegs im Schwerpunkt also auf die Einfederwege an den Rädern oder Achsen transformiert. Vorzugsweise wird auf diese Weise auch die jeweilige radindividuelle Einfedergeschwindigkeit bestimmt.

Gemäß einer bevorzugten Weiterbildung der Erfindung werden in Abhängigkeit der Einfederwege, radindividueller Federkräfte und Dämpferkräfte radindividuelle Vertikalkräfte zwischen Rad und Karosserie berechnet. Dabei werden insbesondere die Dämpferkonstante und Dämpferkraft der Radaufhängung sowie die Federkonstante und Federkraft berücksichtigt an dem jeweiligen Rad.

Vorzugsweise wird in Abhängigkeit der Vertikalkräfte unter Berücksichtigung der jeweiligen Radmasse dann die radindividuellen Normalkräfte berechnet. Diese werden dann der Bestimmung der Bremskräfte, wie vorstehend bereits beschrieben, zugrunde gelegt.

Das erfindungsgemäße Computer-Programm mit den Merkmalen des Anspruchs 10 zeichnet sich dadurch aus, dass es alle Schritte des erfindungsgemäßen Verfahrens durchführt, wenn es auf einem Computer ausgeführt wird. Es ergeben sich dadurch die bereits genannten Vorteile.

Das erfindungsgemäße Computerprogramm-Produkt mit den Merkmalen des Anspruchs 11 zeichnet sich durch das auf einem maschinenlesbaren Speichermedium gespeicherten oder hinterlegten erfindungsgemäßen Computerprogramm aus.

Die erfindungsgemäße Vorrichtung mit den Merkmalen des Anspruchs 12 zeichnet sich durch ein Steuergerät aus, das speziell dazu hergerichtet ist, das erfindungsgemäße Verfahren auszuführen. Insbesondere ist das Steuergerät dazu ausgebildet, das erfindungsgemäße Computerprogramm auszuführen, wobei das Computerprogramm bevorzugt auf einem nicht-flüchtigen Speicher des Steuergeräts hinterlegt ist. Alternativ weist das Steuergerät bevorzugt eine Lesemöglichkeit für das erfindungsgemäße Computerprogramm-Produkt auf.

Das erfindungsgemäße Bremssystem mit den Merkmalen des Anspruchs 13 zeichnet sich durch die erfindungsgemäße Vorrichtung aus. Es ergeben sich die bereits genannten Vorteile.

Weitere Vorteile und bevorzugte Merkmale und Merkmalskombinationen ergeben sich insbesondere aus dem zuvor Beschriebenen.

Im Folgenden soll die Erfindung anhand der Zeichnung näher erläutert werden. Dazu zeigen

Figuren 1A bis 1C     eine vereinfachte Darstellung einer Fahrzeugdynamik eines Kraftfahrzeugs,

Figur 2     ein vereinfachtes physikalisches Modell des Kraftfahrzeugs und

Figur 3     ein Flussdiagramm zur Erläuterung eines vorteilhaften Verfahrens zum Betreiben eines Bremssystems des Kraftfahrzeugs.

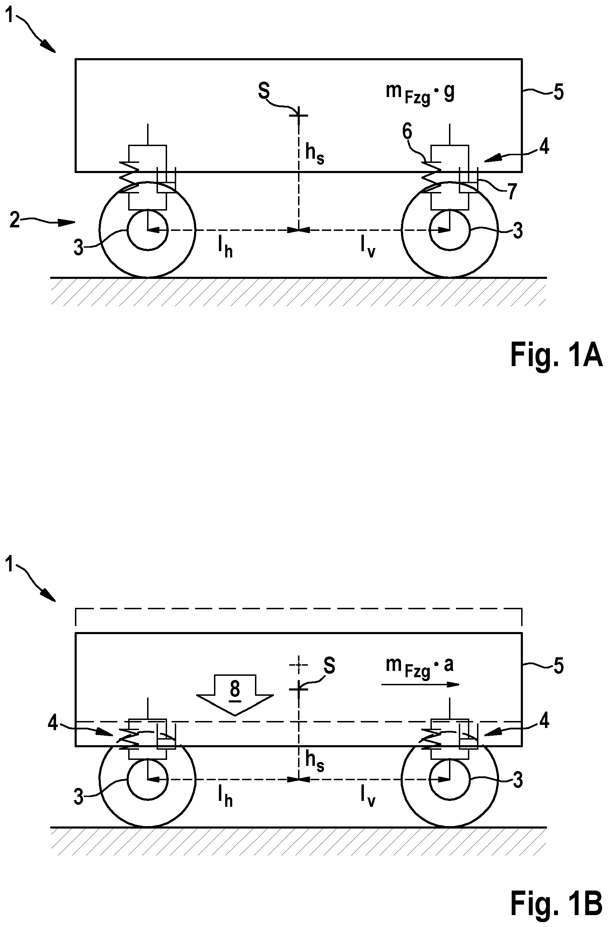

Figuren 1A bis 1C zeigen jeweils in einer vereinfachten Darstellung ein Kraftfahrzeug 1 mit einem Bremssystem 2, das für jedes Rad des Kraftfahrzeugs jeweils eine individuell ansteuerbare Radbremse 3 aufweist. Die Räder sind durch eine Radaufhängung 4 individuell an einer Karosserie 5 des Kraftfahrzeugs gelagert, sodass die Räder unabhängig voneinander relativ zu der Karosserie bewegbar sind. Jedem Rad ist dabei durch die Radaufhängung 4 eine Stützfeder 6 sowie ein Dämpfer 7 zugeordnet, die zusammen ein Federdämpfersystem der Radaufhängung 4 für das jeweilige Rad bilden. Der Schwerpunkt des Kraftfahrzeugs ist dabei mit S gekennzeichnet, die Masse des Kraftfahrzeugs 1 mit $m_{Fzg}$. Der Schwerpunkt S liegt im Ruhezustand des Kraftfahrzeugs 1, wie es in Figur 1A gezeigt ist, auf einer Höhe $h_S$ oberhalb der Drehachsen der Räder 3 und in einem vertikalen Abstand $l_h$ zu einem in Fahrtrichtung hinten liegenden Rad und in einem Abstand $l_v$ zu einem in Fahrtrichtung vorne liegenden Rad.

Figur 1B zeigt das Kraftfahrzeug 1 in einem zweiten Zustand, in welchem die Karosserie 5 in Richtung der Fahrbahn beziehungsweise der Räder eingefedert ist, sodass der Abstand $h_s$ verkleinert ist. Weil es sich um eine reine vertikale Bewegung handelt, federt die Radaufhängung 4 an beiden Rädern 3 gleich weit ein. Die Radfedern 6 und Dämpfer 7 sind dabei vorne und hinten beziehungsweise an allen Rädern gleich belastet.

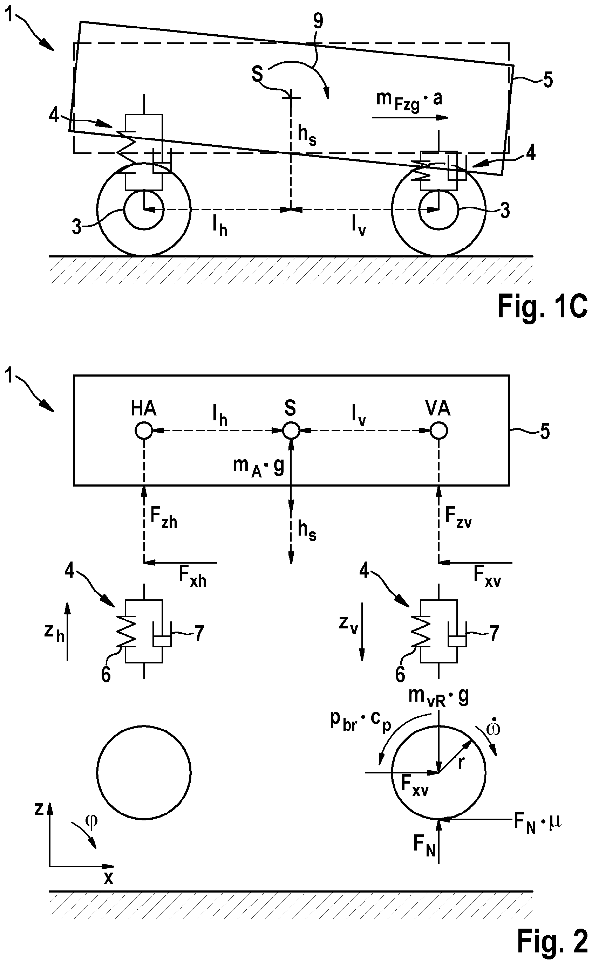

Figur 1C zeigt das Kraftfahrzeug 1 in einem Zustand, in welchem die Karosserie 5 eine Nickbewegung, wie durch einen Pfeil 9 gezeigt, ausführt. Bei der Nickbewegung schwenkt die Karosserie 5 um eine durch den Schwerpunkt S verlaufende horizontale Achse, die quer zur Fahrtrichtung ausgerichtet ist. In dem in Figur 1C dargestellten Ausführungsbeispiel erfolgt die Nickbewegung aufgrund eines Bremseingriffs, durch welchen das Kraftfahrzeug 1 verzögert wird. Durch die Verzögerung schwenkt die Karosserie 5 an ihrem vorderen Ende nach unten und an ihrem hinteren Ende nach oben.

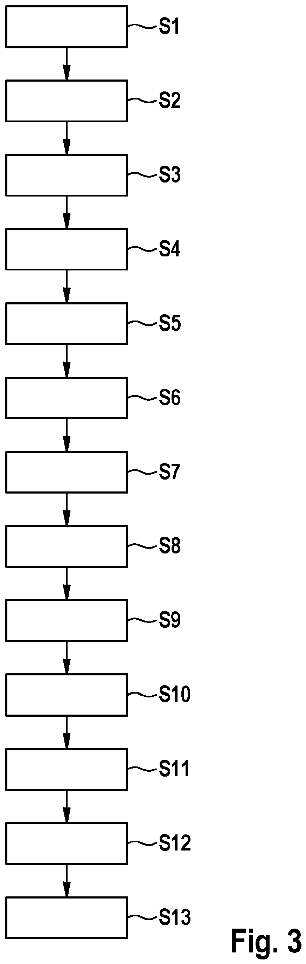

Figur 2 zeigt ein vereinfachtes physikalisches Modell des Kraftfahrzeugs 1, das als Einspurmodell ausgebildet ist. Anhand des Modells sowie des in Figur 3 gezeigten Flussdiagramms soll im Folgenden ein vorteilhaftes Verfahren beschrieben werden, das gewährleistet, dass durch die Radbremsen 3 stets die bestmögliche Bremsleistung zur Verfügung gestellt wird. Das Verfahren wird insbesondere von einem Steuergerät des Kraftfahrzeugs ausgeführt, das einen nicht-flüchtigen Speicher aufweist, in welchem das Verfahren als Computerprogramm hinterlegt ist. Mit der Inbetriebnahme des Kraftfahrzeugs im Schritt S1 beginnt das Verfahren.

Zunächst werden in einem Schritt S2 mithilfe der Momentenbilanz an dem jeweiligen Rad, die sich aus dem Drallsatz ergibt, die Bremskraft $F_x$ in Längsrichtung für jedes Rad berechnet, sodass gemäß dem Einspurmodell für das Hinterrad eine Längskraft $F_{xh}$ und für das vordere Rad ein Längskraft $F_{xv}$ berechnet werden. Aus dem Drallsatz für dieses Beispiel ergibt sich für das Rad vorne links (Index: FL = vorne links, FR = vorne rechts, RL = hinten links, RR = hinten rechts, rear = hinten, front = vorne) beispielsweise:

$$\dot{\omega}^{FL} = \frac{-F_x^{FL} \cdot r - M_{br}^{FL} + M_{Motor}}{J_{Rad}} \qquad (1)$$

Mithilfe der bekannten Größen wie Antriebsdrehmoment $M_{Motor}$, Radbremsdruck, Radträgheitsmoment $J_{Rad}$, Radbeschleunigung und Antriebsmoment wird nach Umstellung der Gleichung (1) die Bremskraft in Längsrichtung berechnet. Das für die Berechnung erforderliche Bremsmoment $M_{br}$ wird dabei insbesondere aus dem Radbremsdruck und einem linearen Umrechnungsfaktor cp ermittelt.

Im darauffolgenden Schritt S3 wird eine Differentialgleichung für die Vertikaldynamik der Karosserie 5 im Fahrzeugschwerpunkt S aufgestellt:

$$\ddot{z} = \frac{d(z)}{dt} = \frac{F_z^{FL} + F_z^{FR} + F_z^{RL} + F_z^{RR}}{m_{Fzg}} - g \cdot \cos(\alpha) \qquad (2)$$

Wie aus Gleichung (2) erkennbar ist, wird die Beschleunigung der Karosserie 5 im Schwerpunkt S mithilfe der Vertikalkräfte zwischen Karosserie und Rad berechnet. Dabei werden die Vertikalkräfte $F_{zh}$, $F_{zv}$, die auf das jeweilige Rad wirken, zunächst als bekannte Größen, insbesondere als die im vorhergehenden Berechnungszyklus ermittelten Größen, vorausgesetzt. Durch Integration in Schritt S4 wird die Geschwindigkeit z der Karosserie 5 im Schwerpunkt S in vertikaler Richtung berechnet:

$$\dot{z} = \int \ddot{z}(t) \cdot dt \qquad (3)$$

Eine noch weitere Integration der Geschwindigkeit in Schritt S5 führt zu dem Einfederweg der Karosserie 5 am Schwerpunkt gegenüber der Ausgangsstellung:

$$z = \int \dot{z}(t) \cdot dt \qquad (4)$$

Um die Nickdynamik der Karosserie 5 im Schwerpunkt S zu berechnen, wird in einem Schritt S6 vorzugsweise die Momentenbilanz über das Drehverhalten der Karosserie 5 mittels einer Drallsatzberechnung aufgestellt:

$$\ddot{\varphi} = \frac{d(\dot{\varphi})}{dt} = \frac{(F_z^{RL} + F_z^{RR}) \cdot l_{rear}^{CG} - (F_z^{FL} + F_z^{FR}) \cdot l_{front}^{CG} - (F_x^{FL} + F_x^{FR} + F_x^{RL} + F_x^{RR}) \cdot h^{CG}}{J\_Fzg} \qquad (5)$$

Die Differentialgleichung ergibt die Winkelbeschleunigung $\ddot{\varphi}$ der Karosserie 5. Die Dafür erforderlichen Größen, wie Bremskräfte in Längsrichtung $F_{xh}$, $F_{xv}$ ergeben sich bereits aus Gleichung (1). Die ebenfalls benötigten Vertikalkräfte $F_{zh}$, $F_{zv}$ zwischen Karosserie 5 und Rad werden wie bei Gleichung (2) zunächst als bekannte Größen, insbesondere aus dem vorhergehenden Zyklus vorausgesetzt.

Analog zur Vertikalgeschwindigkeit wird durch eine Integration der Winkelbeschleunigung in Schritt S7 die Winkelgeschwindigkeit $\dot{\varphi}$ erhalten:

$$\dot{\varphi} = \int \ddot{\varphi}(t) \cdot dt \qquad (6)$$

Durch eine weitere Integration der Winkelgeschwindigkeit $\dot{\varphi}$ in Schritt S8 wird der Nickwinkel $\varphi$ erhalten:

$$\varphi = \int \dot{\varphi}(t) \cdot dt \qquad (7)$$

Mithilfe des Nickwinkels $\varphi$ wird nun in Schritt S9 die Transformation des Einfederwegs im Schwerpunkt S der Karosserie 5 auf die radindividuellen Einfederwege der Radaufhängung 4 an den Achsen des Kraftfahrzeugs 1 transformiert. Gleiches gilt für die Einfedergeschwindigkeit:

$$z^{FL} = z^{FR} = z^{CG} - l_{front}^{CG} \cdot \sin(\varphi^{CG})$$
$$z^{RL} = z^{RR} = z^{CG} - l_{rear}^{CG} \cdot \sin(\varphi^{CG}) \qquad (8)$$

$$\dot{z}^{FL} = \dot{z}^{FR} = \dot{z}^{CG} - l_{front}^{CG} \cdot \sin(\varphi^{CG})$$
$$\dot{z}^{RL} = \dot{z}^{RR} = \dot{z}^{CG} - l_{rear}^{CG} \cdot \sin(\varphi^{CG}) \qquad (9)$$

Die Federkraft $F_c$ zwischen Karosserie 5 und Rad, insbesondere die radindividuelle Federkraft $F_{ch}$, $F_{cv}$ wird dann in Schritt S10 mithilfe des Einfederwegs z und der Federsteifigkeit c folgendermaßen berechnet:

$$F_c^{FL} = -c^{FA} \cdot z^{FL} \qquad (8)$$

Die Berechnung wird für alle Räder des Kraftfahrzeugs analog zu Gleichung (8) ausgeführt.

Die Dämpferkraft $F_d$ zwischen Karosserie und Rad wird in Schritt S11 insbesondere radindividuell als Dämpferkraft $F_{dv}$ und $F_{dh}$ anhand der Einfedergeschwindigkeit $\dot{z}$ und der Dämpferkonstante d berechnet:

$$F_d^{FL} = -d^{FA} \cdot \dot{z}^{FL} \qquad (9)$$

Auch hier wird die Berechnung für alle Räder des Kraftfahrzeugs 1 analog zur Gleichung (9) ausgeführt.

Bei der Dämpferkonstante d kann zwischen Zug- und Druckstufe unterschieden werden. Des Weiteren ist es möglich, dass die Dämpferkonstante ein von der Einfedergeschwindigkeit abhängiges nicht-lineares Verhalten aufweist. Dies ist jedoch von dem jeweiligen Fahrwerk des Kraftfahrzeugs 1 beziehungsweise von der jeweiligen Radaufhängung 4 abhängig.

Die Vertikalkräfte zwischen Karosserie 5 und dem jeweiligen Rad $F_{zh}$, $F_{zv}$ werden im Anschluss in Schritt S12 mithilfe der Feder- und Dämpferkräfte sowie dem Einfluss einer Bremsmomentenabstützung, die sich aus der Radaufhängung ergibt, berechnet (am Beispiel vom Rad vorne links (FL)):

$$F_z^{FL} = F_c^{FL} + F_d^{FL} + k_{Mbr}^{FA} \cdot F_x^{Fl} \qquad (10)$$

Auch diese Berechnung wird für jedes Rad des Kraftfahrzeugs analog zur Gleichung (10) ausgeführt.

Der Faktor der Bremsmomentenabstützung $k_{Mbr}$ ist von der Konstruktion der Radaufhängung 4 abhängig und wird bevorzugt zuvor berechnet.

Abschließend werden in Schritt S13 die radindividuellen Normalkräfte $F_N$ aus den Vertikalkräften $F_z$ und der Radmasse $m_R$ berechnet:

$$F_N = F_{zv} + m_{vR} \cdot g \qquad\qquad (11)$$

Gleichung (11) wird analog für jedes Rad des Kraftfahrzeugs angewandt.

Auf diese Art und Weise werden für jedes Rad des Kraftfahrzeugs 1 die Normalkräfte und damit die Aufstandskräfte des Rads auf der Fahrbahn berechnet und dem Bremssystem zur Verfügung gestellt, sodass dieses die Bremskräfte radindividuell optimal derart einstellt, dass eine bestmögliche Bremsleistung erzielt wird.

## Patentansprüche

1. Verfahren zum Betreiben eines Bremssystems (2) eines Kraftfahrzeugs (1), wobei das Kraftfahrzeug (1) eine Karosserie (5) und mehrere relativ zu der Karosserie (5) durch eine Radaufhängung (4) an der Karosserie (5) gelagerte Räder aufweist, wobei die Karosserie (5) durch die Radaufhängung (4) eine Nickbewegung ausführen kann, und wobei das Bremssystem (2) für zumindest einige der Räder eine radindividuelle Radbremse (3) aufweist, und wobei ein Nickwinkel der Karosserie (5) überwacht und die Radbremsen (3) in Abhängigkeit von dem erfassten Nickwickel ($\varphi$) angesteuert werden, **dadurch gekennzeichnet, dass** in Abhängigkeit von dem Nickwinkel ($\varphi$) auf die Räder wirkende Normalkräfte ($F_N$) berechnet werden, sodass in Abhängigkeit der berechneten Normalkräfte ($F_N$) ein maximal mögliches Bremsmoment bestimmbar und durch die jeweilige Radbremse einstellbar ist.

2. Verfahren nach Anspruch 1, **dadurch gekennzeichnet, dass** der Nickelwinkel ($\varphi$) mithilfe eines programmierten Modells, insbesondere Einspurmodells, ermittelt wird.

3. Verfahren nach Anspruch 2, **dadurch gekennzeichnet, dass** das Modell vertikale Translationsbewegungen und Rotationsbewegungen der Karosserie (5) berücksichtigt.

4. Verfahren nach einem der vorhergehenden Ansprüche, **dadurch gekennzeichnet, dass** zumindest ein von der Radaufhängung (4) abhängiger Bremsmomentabstützungsfaktor ($k_{Mbr}$) berücksichtigt wird.

5. Verfahren nach Anspruch 3, **dadurch gekennzeichnet, dass** zur Bestimmung der vertikalen Translationsbewegung eine Vertikaldynamik im Schwerpunkt (S) der Karosserie (5) ermittelt wird.

6. Verfahren nach Anspruch 5, **dadurch gekennzeichnet, dass** in Abhängigkeit der ermittelten Vertikaldynamik mithilfe einer Drallsatzberechnung eine Nickdynamik im Schwerpunkt (S) der Karosserie (5) in Abhängigkeit von in Fahrtrichtung wirkenden Bremskräften ($F_X$) an den Rädern ermittelt wird.

7. Verfahren nach Anspruch 6, **dadurch gekennzeichnet, dass** in Abhängigkeit von der ermittelten Nickdynamik die Vertikaldynamik auf radindividuelle Einfederwege der Radaufhängung (4) transformiert wird.

8. Verfahren nach Anspruch 7, **dadurch gekennzeichnet, dass** in Abhängigkeit der Einfederwege, einer radindividuellen Federkraft und Dämpferkraft radindividuelle Vertikalkräfte zwischen dem jeweiligen Rad und der Karosserie (5) berechnet werden.

9. Verfahren nach Anspruch 8, **dadurch gekennzeichnet, dass** in Abhängigkeit der Vertikalkräfte unter Berücksichtigung der jeweiligen Radmasse radindividuelle Normalkräfte ($F_N$) berechnet werden.

10. Computerprogramm, welches dazu eingerichtet ist, alle Schritte eines Verfahrens gemäß einem der Ansprüche 1 bis 9 auszuführen.

11. Computerprogramm-Produkt, **gekennzeichnet durch** ein maschinenlesbares Speichermedium, auf dem das Computerprogramm nach Anspruch 10 gespeichert ist.

12. Vorrichtung zum Betreiben eines Kraftfahrzeugs (1), das Kraftfahrzeug (1) eine Karosserie (5) und mehrere relativ zu der Karosserie (5) durch eine Radaufhängung (4) an der Karosserie (5) gelagerte Räder aufweist, wobei die Karosserie (5) durch die Radaufhängung (4) eine Nickbewegung ausführen kann, und wobei das Bremssystem (2) für zumindest einige der Räder eine radindividuelle Radbremse (3) aufweist, **gekennzeichnet durch** ein Steuergerät, das speziell dazu hergerichtet ist, das Verfahren gemäß einem der Ansprüche 1 bis 9 durchzuführen.

13. Bremssystem für ein Kraftfahrzeug, wobei das Kraftfahrzeug eine Karosserie (5) und mehrere relativ zu der Karosserie (5) durch eine Radaufhängung (4) an der Karosserie (5) gelagerte Räder aufweist, wobei die Karosserie (5) durch die Radaufhängung (4) eine Nickbewegung ausführen kann, und wobei das Bremssystem (2) für zumindest einige der Räder eine radindividuelle Radbremse (3) aufweist, **gekennzeichnet durch** eine Vorrichtung nach Anspruch 12.

**Claims**

1. Method for operating a brake system (2) of a motor vehicle (1), the motor vehicle (1) having a vehicle body (5) and a plurality of wheels which are mounted relative to the vehicle body (5) by way of a wheel suspension system (4) on the vehicle body (5), it being possible for the vehicle body (5) to carry out a pitch movement by way of the wheel suspension system (4), and the brake system (2) having a wheel-individual wheel brake (3) for at least some of the wheels, and a pitch angle of the vehicle body (5) being monitored, and the wheel brakes (3) being actuated in a manner which is dependent on the detected pitch angle ($\varphi$), **characterized in that** normal forces ($F_N$) which act on the wheels are calculated in a manner which is dependent on the pitch angle ($\varphi$), with the result that a maximum possible brake torque can be determined in a manner which is dependent on the calculated normal forces ($F_N$) and can be set by way of the respective wheel brake.

2. Method according to Claim 1, **characterized in that** the pitch angle ($\varphi$) is determined with the aid of a programmed model, in particular a single-track model.

3. Method according to Claim 2, **characterized in that** the model considers vertical translational movements and rotational movements of the vehicle body (5).

4. Method according to one of the preceding claims, **characterized in that** at least one brake torque support factor ($k_{Mbr}$) which is dependent on the wheel suspension system (4) is considered.

5. Method according to Claim 3, **characterized in that** vertical dynamics are ascertained at the centre of gravity (S) of the vehicle body (5) in order to determine the vertical translational movement.

6. Method according to Claim 5, **characterized in that**, in a manner which is dependent on the ascertained vertical dynamics with the aid of a principle of angular momentum calculation, pitch dynamics at the centre of gravity (S) of the vehicle body (5) are ascertained in a manner which is dependent on brake forces ($F_X$) acting in the direction of travel on the wheels.

7. Method according to Claim 6, **characterized in that** the vertical dynamics are transformed into wheel-individual compression travels of the wheel suspension system (4) in a manner which is dependent on the ascertained pitch dynamics.

8. Method according to Claim 7, **characterized in that** wheel-individual vertical forces between the respective wheel and the vehicle body (5) are calculated in a manner which is dependent on the compression travels and a wheel-individual spring force and damper force.

9. Method according to Claim 8, **characterized in that** wheel-individual normal forces ($F_N$) are calculated in a manner which is dependent on the vertical forces with consideration of the respective wheel mass.

10. Computer program which is configured to carry out all the steps of a method according to one of Claims 1 to 9.

11. Computer program product, **characterized by** a computer-readable memory medium, in which a computer program according to Claim 10 is stored.

12. Apparatus for operating a motor vehicle (1), the motor vehicle (1) having a vehicle body (5) and a plurality of wheels which are mounted relative to the vehicle body (5) by way of a wheel suspension system (4) on the vehicle body (5), it being possible for the vehicle body (5) to carry out a pitch movement by way of the wheel suspension system (4), and the brake system (2) having a wheel-individual wheel brake (3) for at least some of the wheels, **characterized**

**by** a control unit which is specifically configured to carry out the method according to one of Claims 1 to 9.

13. Brake system for a motor vehicle, the motor vehicle having a vehicle body (5) and a plurality of wheels which are mounted relative to the vehicle body (5) by way of the wheel suspension system (4) on the vehicle body (5), it being possible for the vehicle body (5) to carry out a pitch movement by way of the wheel suspension system (4), and the brake system (2) having a wheel-individual wheel brake (3) for at least some of the wheels, **characterized by** an apparatus according to Claim 12.

**Revendications**

1. Procédé d'exploitation d'un système de freinage (2) d'un véhicule automobile (1), le véhicule automobile (1) présentant une carrosserie (5) et plusieurs roues montées sur la carrosserie (5) par rapport à la carrosserie (5) par une suspension de roue (4), la carrosserie (5) pouvant effectuer un mouvement de tangage par la suspension de roue (4), et le système de freinage (2) présentant pour au moins certaines des roues un frein de roue (3) individuel à la roue, et un angle de tangage de la carrosserie (5) étant surveillé et les freins de roue (3) étant commandés en fonction de l'angle de tangage ($\varphi$) détecté, **caractérisé en ce que** des forces normales ($F_N$) agissant sur les roues sont calculées en fonction de l'angle de tangage ($\varphi$), de telle sorte qu'un couple de freinage maximal possible peut être déterminé en fonction des forces normales ($F_N$) calculées et peut être ajusté par le frein de roue respectif.

2. Procédé selon la revendication 1, **caractérisé en ce que** l'angle de tangage ($\varphi$) est déterminé à l'aide d'un modèle programmé, notamment d'un modèle à deux roues.

3. Procédé selon la revendication 2, **caractérisé en ce que** le modèle prend en compte des mouvements de translation verticaux et des mouvements de rotation de la carrosserie (5).

4. Procédé selon l'une quelconque des revendications précédentes, **caractérisé en ce qu'**au moins un facteur d'appui du couple de freinage ($k_{Mbr}$) dépendant de la suspension de roue (4) est pris en compte.

5. Procédé selon la revendication 3, **caractérisé en ce que**, pour déterminer le mouvement de translation vertical, une dynamique verticale au centre de gravité (S) de la carrosserie (5) est déterminée.

6. Procédé selon la revendication 5, **caractérisé en ce qu'**en fonction de la dynamique verticale déterminée, une dynamique de tangage au centre de gravité (S) de la carrosserie (5) est déterminée à l'aide d'un calcul de taux de torsion en fonction de forces de freinage ($F_X$) agissant sur les roues dans la direction de la marche.

7. Procédé selon la revendication 6, **caractérisé en ce qu'**en fonction de la dynamique de tangage déterminée, la dynamique verticale est transformée en courses de suspension individuelles à la roue de la suspension de roue (4).

8. Procédé selon la revendication 7, **caractérisé en ce que** des forces verticales individuelles à la roue entre la roue respective et la carrosserie (5) sont calculées en fonction des courses de suspension, d'une force de ressort individuelle à la roue et d'une force d'amortissement.

9. Procédé selon la revendication 8, **caractérisé en ce que** des forces normales ($F_N$) individuelles à la roue sont calculées en fonction des forces verticales en tenant compte de la masse de roue respective.

10. Programme informatique adapté pour exécuter toutes les étapes d'un procédé selon l'une quelconque des revendications 1 à 9.

11. Produit de programme informatique, **caractérisé par** un support de stockage lisible par machine sur lequel est stocké le programme informatique selon la revendication 10.

12. Dispositif d'exploitation d'un véhicule automobile (1), le véhicule automobile (1) présentant une carrosserie (5) et plusieurs roues montées sur la carrosserie (5) par rapport à la carrosserie (5) par une suspension de roue (4), la carrosserie (5) pouvant effectuer un mouvement de tangage par la suspension de roue (4), et le système de freinage (2) présentant pour au moins certaines des roues un frein de roue (3) individuelle à la roue, **caractérisé par** un dispositif de commande spécialement conçu pour mettre en œuvre le procédé selon l'une quelconque des revendications 1 à 9.

**13.** Système de freinage pour un véhicule automobile, le véhicule automobile présentant une carrosserie (5) et plusieurs roues montées sur la carrosserie (5) par rapport à la carrosserie (5) par une suspension de roue (4), la carrosserie (5) pouvant effectuer un mouvement de tangage par la suspension de roue (4), et le système de freinage (2) présentant pour au moins certaines des roues un frein de roue (3) individuel à la roue, **caractérisé par** un dispositif selon la revendication 12.

Fig. 1A

Fig. 1B

Fig. 1C

Fig. 2

Fig. 3

**IN DER BESCHREIBUNG AUFGEFÜHRTE DOKUMENTE**

**In der Beschreibung aufgeführte Patentdokumente**

- US 5772289 A